# EUROPÄISCHE PATENTSCHRIFT

(11) **EP 0 933 247 B1**
(45) Veröffentlichungstag und Bekanntmachung des Hinweises auf die Patenterteilung: **27.03.2002**
(21) Anmeldenummer: 98124682.0
(22) Anmeldetag: 24.12.1998
(51) Int. Cl.: B60N 2/44

(54) **Belüfteter Fahrzeugsitz**
Ventilated vehicle seat
Siège de véhicule aéré

(30) Priorität: 03.02.1998 DE 19804100
(43) Veröffentlichungstag der Anmeldung: 04.08.1999
(73) Patentinhaber: DaimlerChrysler AG, 70567 Stuttgart (DE)
(72) Erfinder: Faust, Eberhard, 70597 Stuttgart (DE); Pfahler, Karl, Dr., 70180 Stuttgart (DE)

(56) Entgegenhaltungen:
- DE-A- 3 609 095
- DE-C- 19 628 698
- DE-U- 29 505 981
- FR-A- 2 744 896
- US-A- 5 016 302
- US-A- 5 403 065

## Beschreibung

Die Erfindung betrifft einen Fahrzeugsitz gemäß dem Oberbegriff des Patentanspruchs 1.

Solche belüfteten Fahrzeugsitze dienen der Verbesserung des Sitzklimakomforts sowohl beim Einsteigen in ein geparktes, durch längere Sonneneinstrahlung überhitztes Fahrzeug, als. auch über längere Fahrzeiten hinweg.

Bei einem Fahrzeugsitz dieser Art (DE 196 28 698 C1) überzieht die aus einem grobmaschigen Abstandsgewirk bestehende luftdurchflutbare Polsterschicht, die sog. Ventilationsschicht, ganzflächig eine Polsterauflage aus Gummihaar oder Schaumstoff, die auf einem Polsterträger, z.B. einem Federkern, aufliegt, und ist auf ihrer von der Polsterauflage abgekehrten Ober- oder Vorderseite von einer luftdurchlässigen Druckverteilungsschicht aus einem Abstandsgewirk, Vlies oder offenporigen Schaum überzogen. Die Druckverteilungsschicht ist von einem Polsterbezug überspannt, und zwischen Polsterbezug und Druckverteilungsschicht ist eine Bezugsfüllung eingearbeitet. Zur Belüftung der Ventilationsschicht ist eine Vielzahl von elektrisch angetriebenen Miniaturlüftern oder Miniaturventilatoren vorgesehen, die in in die Polsterauflage eingearbeiteten Luftkanälen eingesetzt sind. Diese Luftkanäle sind über die Polsterfläche verteilt angeordnet. In einem begrenzten Bereich oberhalb der Luftkanalmündungen ist jeweils auf der von der Luftkanalmündung abgekehrten Oberseite der Ventilationsschicht eine luftundurchlässige Zwischenlage, z.B. eine Folie, angeordnet, so daß hier die über den Luftkanal in die Ventilationsschicht eingeblasene Luft nicht sofort durch die Druckverteilungsschicht und dem Polsterbezug austritt, sondern umgelenkt wird und die Ventilationsschicht durchströmt. Die Miniaturlüfter saugen aus dem unterhalb des Sitzteils befindlichen Bereich des Fahrgastraums Luft an und blasen diese in die Ventilationsschicht. In der Ventilationsschicht kann sich die Luft in allen Richtungen ausbreiten und strömt bei unbesetztem Sitz durch die Druckverteilungsschicht und den Polsterbezug hindurch in den Luftraum oberhalb der Sitzoberfläche, wodurch eine rasche Abkühlung der z.B. durch Sonneneinstrahlung aufgeheizten Sitzfläche bewirkt wird. Bei besetztem Sitz strömt die Luft in der Ventilationsschicht entlang und tritt an den offenen Enden der Ventilationsschicht wieder aus. Sie erzeugt dabei einen Temperatur- und Luftfeuchtigkeitsgradienten und führt die vom Sitzenden angefeuchtete Luft ab.

Der Erfindung liegt die Aufgabe zugrunde, bei einem Fahrzeugsitz der eingangs genannten Art die Sitzbelüftung hinsichtlich Wirkungsgrad und Schnelligkeit bei der Herabsetzung aufgeheizter Sitzoberflächen auf komfortable Temperaturen zu verbessern und dabei eine möglichst kompakte Bauform des Fahrzeugsitzes zu ermöglichen.

Die Aufgabe ist bei einem Fahrzeugsitz der Oberbegriff des Anspruchs 1 definierten Gattung erfindungsgemäß durch die Merkmale im Kennzeichenteil des Patentanspruchs 1 gelöst.

Der erfindungsgemäße Fahrzeugsitz hat den Vorteil, daß durch die unmittelbare Integration eines zumindest radial rundum ausblasenden Ventilators in die Ventilationsschicht auch bei geringer Ventilatorabmessung und -leistung ein ausreichend großer Luftdurchsatz in der Ventilationsschicht erzielt wird, der bei unbesetztem Sitz ein durch Sonneneinstrahlung aufgeheiztes Polster in kurzer Zeit auf komfortable Temperaturen herunterkühlt. Für die Kühlung des Polsters im Sitzteil und/oder in der Rückenlehne werden nur wenige Ventilatoren benötigt, im Extremfall nur ein einziger, der jeweils mittig in der Polsterfläche angeordnet wird. Die Ventilatorintegration in die Ventilationsschicht ermöglicht darüber hinaus in Grenzen eine freie Wahl der Plazierung der Ventilatoren, so daß sie besser in einer Polsterzone untergebracht werden können, wo der notwendige Platz vorhanden ist. Auf den üblicherweise unter dem Polster erforderlichen Bauraum zur Unterbringung der Ventilatoren wird verzichtet, was für moderne Sitze von wesentlichem Vorteil ist, da dieser Platz für die Unterbringung von sog. Antisubmarining-Keilen oder -rampen und für die Elektronik und Pneumatik zur automatischen Sitzeinstellung benötigt wird.

Vorteilhafte Ausführungsformen des erfindungsgemäßen Fahrzeugsitzes mit zweckmäßigen Weiterbildungen und Ausgestaltungen der Erfindung sind in den weiteren Patentansprüchen angegeben.

Gemäß einer bevorzugten Ausführungsform der Erfindung ist die Ventilationsschicht eine luftdurchlässige Polsterauflage, die nur unter Zwischenlage einer luftundurchlässigen Druckverteilungsschicht auf einem Polsterträger aufliegt. In der Druckverteilungsschicht ist eine mit der Ansaugöffnung des mindestens einen Ventilators kongruente Lufteinströmung ausgebildet. Durch diese Ausbildung des Polsters wird eine kostengünstige Lösung des Fahrzeugsitzes erzielt, die einen Einsatz des Fahrzeugsitzes bei Fahrzeugen der mittleren und unteren Preisklasse ermöglicht. Zugleich wird ein extrem kompakter Fahrzeugsitz geschaffen, der zudem keinen Bauraum unter dem Polster des Sitzteils bzw. hinter dem Polster in der Rückenlehne benötigt.

Die Erfindung ist anhand von in der Zeichnung dargestellten Ausführungsbeispielen im folgenden näher beschrieben. Es zeigen jeweils in schematischer Darstellung:
- Fig. 1: einen Längsschnitt eines Fahrzeugsitzes,
- Fig. 2: eine Draufsicht des Sitzteils des Fahrzeugsitzes in Fig. 1,
- Fig. 3: eine gleiche Darstellung wie in Fig. 2 eines modifizierten Sitzteils,
- Fig. 4: einen Längsschnitt eines Sitzteils eines Fahrzeugsitzes gemäß einem weiteren Ausführungsbeispiel.

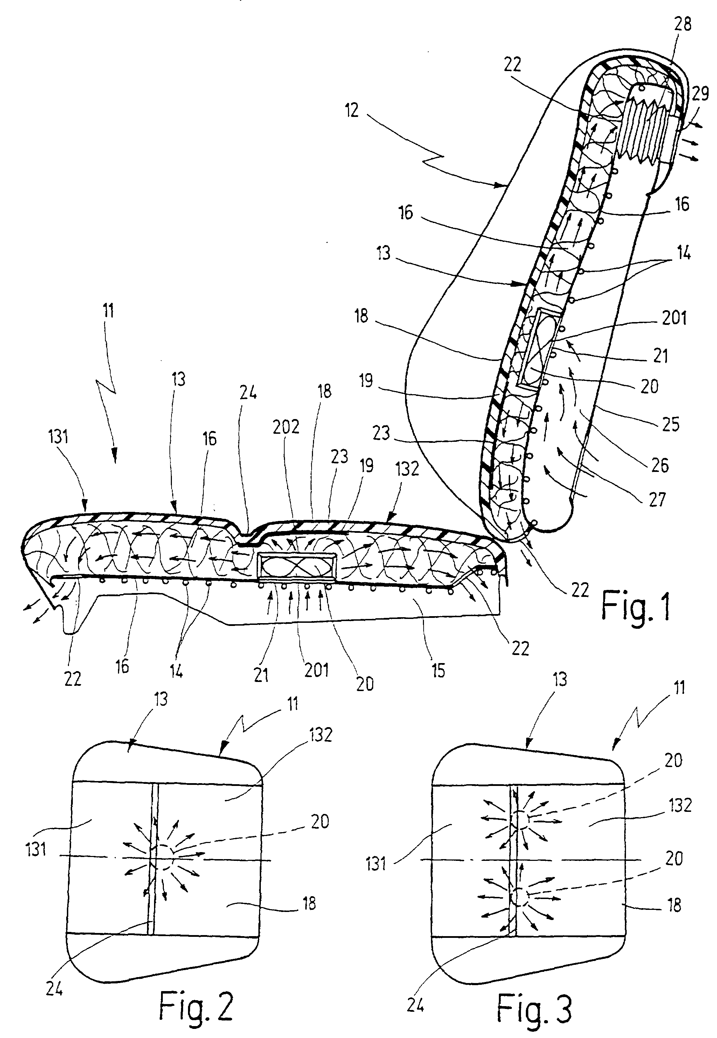

Der in Fig. 1 im Längsschnitt schematisch skizzierte Fahrzeugsitz weist in bekannter Weise ein am Fahrzeugboden verstellbar gehaltenes Sitzteil 11 und eine Rückenlehne 12 auf, die zur Neigungseinstellung über eine Schwenkrasterung mit dem Sitzteil 11 verbunden ist. Sitzteil 11 und Rückenlehne 12 besitzen jeweils ein Polster 13, das auf einem Polsterträger 14 befestigt ist. Im Ausführungsbeispiel der Fig. 1 ist der Polsterträger 14 als ein Federkern aus Federdraht ausgebildet, der jeweils in einem Rahmen befestigt ist. Im Sitzteil 11 ist der Rahmen mit 15 angedeutet, während der Rahmen in der Rückenlehne 12 der Übersichtlichkeit halber weggelassen ist. Das für Sitzteil 11 und Rückenlehne 12 in gleicher Weise aufgebaute Polster 13 umfaßt eine luftdurchlässige Polsterauflage 16 aus grob strukturiertem Vliesmaterial, z.B. Gummihaar, oder aus einem Abstandsgewirk und eine luftundurchlässige Druckverteilungsschicht 17 aus Vlies oder Gummihaarmaterial hoher Dichte, die unmittelbar auf dem Polsterträger 14 aufliegt und die Polsterauflage 16 auf deren Unterseite im Sitzteil 11 bzw. auf deren Rückseite in der Rückenlehne 12 vollständig überdeckt. Die von der Druckverteilungsschicht 17 abgekehrte Ober- oder Vorderseite des Polsters 13 ist mit einem luftdurchlässigen Polsterbezug 18 aus Textilstoff oder perforiertem Leder oder Kunststoff überzogen, und zwischen Polsterauflage 16 und Polsterbezug 18 ist eine Bezugsfüllung 19 aus Polsterwatte, Wollvlies oder einem offenporigen oder zumindest teilweise perforierten Schaumstoff oder aus einer Watte-Schaum-Kombination eingearbeitet. Im Falle einer elektrischen Sitzheizung sind - wie hier nicht weiter dargestellt - deren Heizdrähte in der Bezugsfüllung 19 eingebettet.

Die luftdurchlässige Polsterauflage 16 stellt eine sog. Ventilationsschicht dar, die mittels eines elektrisch angetriebenen Lüfters oder Ventilators 20 mit Luft durchflutbar ist. Der Ventilator 20 ist so ausgebildet, daß er axial ansaugt und radial rundum oder radial rundum und axial ausbläst, und ist in der Ventilationsschicht, also der luftdurchlässigen Polsterauflage 16, so angeordnet, daß seine Ansaugöffnung 201 auf der von dem Polsterbezug 18 abgekehrten Seite des Polsters 13 frei liegt. Hierzu ist in der Druckverteilungsschicht 17 eine mit der Ansaugöffnung 201 des Ventilators 20 kongruente Lufteinströmöffnung 21 vorgesehen, wobei der Ventilator 20 mit seiner Ansaugöffnung 201 unmittelbar an der Lufteinströmöffnung 21, diese überdeckend, anliegt. Im Polster 13 der Rückenlehne 12 ist der Ventilator 20 als Radiallüfter mit axialer Ansaugöffung 201 und radialer Ausblasrichtung ausgebildet, und im Polster 13 des Sitzteils 11 bläst der Ventilator 20 allseits, also sowohl axial als auch radial aus. Die Ausblasrichtungen des Ventilators 20 sind durch Strömungspfeile symbolisiert. Der Ventilator 20 ist vorzugsweise im mittleren Bereich des Polsters 13 angeordnet, so daß die Luft in der luftdurchlässigen Polsterauflage 16 im Sitzteil 11 sowohl nach vorn als auch nach hinten sowie seitwärts und in der Polsterauflage 16 der Rückenlehne 12 sowohl nach oben als auch nach unten sowie ebenfalls seitwärts strömt. An dem vorderen und hinteren bzw. oberen und unteren Ende sowie den seitlichen Enden des Polsters 13 gelangt die Luft wieder in den Fahrzeuginnenraum. Damit die Luft ungedrosselt aus dem Polster 13 austreten kann und damit ein ausreichend großer Luftfeuchtigkeits- und Temperaturgradient gegenüber dem Mikroklima auf der Polsteroberfläche erzielt wird, um von dort die von dem Sitzenden erzeugte Transpirationsfeuchtigkeit gut abzuführen, sind in der Druckverteilungsschicht 17 an deren vorderem und hinterem bzw. oberem und unterem Ende Luftausströmöffnungen 22 vorgesehen. Durch diese Luftausströmöffnungen 22 wird auch insgesamt der Strömungswiderstand der Polsterauflage 16 herabgesetzt, wodurch der Wirkungsgrad der Sitzbelüftung verbessert wird. Damit bei besetztem Sitz die vom Ventilator 20 ausgeblasene Luft durch den Polsterbezug 18 nicht unmittelbar den Sitzenden anbläst und hierdurch unangenehme Zugerscheinungen auftreten, ist bei dem Polster 13 des Sitzteils 11, in dem ein Ventilator 20 mit allseitiger, also radialer und axialer, Ausblasrichtung installiert ist, im Bereich der axialen Ausblasöffnung 202 des Ventilators 20 auf der Oberfläche der Polsterauflage 16 eine luftundurchlässige Sperrschicht 23, z.B. eine Folie angebracht, die das Austreten von Luft durch die Bezugsfüllung 19 und den Polsterbezug 18 hindurch verhindert und die axial ausgeblasene Luft um etwa 90° umlenkt, so daß sie im oberen Randbereich der Polsterauflage 16 entlangströmt. Die Sperrschicht 23 kann sich dabei über den unmittelbaren Bereich der axialen Ausblasöffnung 202 hinaus erstrecken und in dem Erstreckungsbereich zumindest teilweise perforiert sein, so daß verschiedene Polsterbereiche mit unterschiedlicher Intensität belüftet werden. Bei dem als reiner Radiallüfter ausgebildeten Ventilator 20 im Polster 13 in der Rückenlehne 12 ist auf die Sperrschicht 23 verzichtet, da der Ventilator 20 ausschließlich radial ausbläst. Zum Schutz des Nierenbereichs ist jedoch eine gleiche Sperrschicht 23 unterhalb des Ventilators 20 zwischen Bezugsfüllung 19 und Polsterauflage 16 eingelegt, die verhindert, daß im Nierenbereich Luft durch den Polsterbezug 18 hindurch austritt und hier zu Zugerscheinungen führt.

In dem Ausführungsbeispiel des Fahrzeugsitzes gemäß Fig. 1 ist im Polster 13 von Sitzteil 11 und Rückenlehne 12 jeweils ein Ventilator 20 vorhanden, der im Sitzspiegel bzw. Lehnenspiegel der Polsteroberfläche etwa mittig angeordnet ist. Im Polster 13 des Sitzteils ist der Ventilator 20 nahe einer Abheftung 24 angeordnet, die die Polsterfläche im Sitzteil 11 in eine vordere Polsterzone 131 und eine der Rückenlehne 12 zugekehrte hintere Polsterzone 132 unterteilt. Der Ventilator 20 im Polster 13 der Rückenlehne 12 ist etwas unterhalb der Polstermitte angeordnet.

Wie in Fig. 3 für das Sitzteil 11 dargestellt ist, können im Polster 13 des Sitzteils 11 auch zwei Ventilatoren 20 vorgesehen werden, die mit Querabstand in Sitzbreite gesehen nebeneinander angeordnet sind. Eine gleiche Anordnung von zwei Ventilatoren 30 kann auch im Polster 13 der Rückenlehne 12 vorgesehen werden.

In bekannter Weise ist die Rückenlehne 12 auf ihrer Rückseite mittels einer Lehnenverkleidung 25 abgedeckt, die am unteren Ende der Rückenlehne 12 an dem Lehnenrahmen und nahe dem oberen Ende der Rückenlehne 12 an dem Polsterbezug 18 befestigt ist, der zum diesem Zweck über die Oberkante der Rückenlehne 12 hinweg bis auf die Rückseite der Rückenlehne 12 gezogen ist. Zwischen der Lehnenverkleidung 25 und dem auf dem Polsterträger 14 aufliegenden Polster 13 ist ein Hohlraum 26 vorhanden, der zur Luftführung genutzt wird, damit der Ventilator 20 im Rückenlehnen-Polster 13 Luft aus dem Fahrzeugraum nahe dem Fahrzeugboden ansaugen kann, da hier die Raumaufheizung bei einem in der Sonne geparkten Fahrzeug am niedrigsten liegt. Hierzu ist nahe dem unteren Ende der Rückenlehne 12 in der Lehnenverkleidung 25 eine Lufteintrittsöffnung 27 vorgesehen, und die obere Luftausströmöffnung 22 in der Druckverteilungsschicht 17 ist über einen in Achsrichtung nachgiebigen Luftkanal 28, der im Ausführungsbeispiel der Fig. 1 als Faltenbalg ausgebildet ist, an einer Austrittsöffnung 29 angeschlossen, die in dem Bereich des auf die Rückseite der Rückenlehne 12 gezogenen Polsterbezugs 18 ausgebildet ist.

Bei eingeschalteten Ventilatoren 20 wird von jedem Ventilator 20 über die Lufteintrittsöffnung 27 Luft aus dem Fahrzeuginnenraum angesaugt und rundum radial und ggf. axial in die Polsterauflage 16 eingeblasen. Bei unbesetztem Sitz tritt die Luft durch die luftdurchlässige Bezugsfüllung 19 und den luftdurchlässigen Polsterbezug 18 hindurch in den Raum oberhalb der Polsterober- oder -vorderfläche aus. Ein Restluftanteil tritt über die Luftausströmöffnungen 22 in der Druckverteilungsschicht 17 beim Sitzteil 11 direkt oder bei der Rückenlehne 12 direkt und über den Luftkanal 28 und die Luftaustrittsöffnung 29 im Polsterbezug 18 in den Fahrzeuginnenraum aus. Bei besetztem Sitz strömt der größte Teil der vom Ventilator 20 in die Polsterauflage 16 eingeblasenen Luft ungedrosselt über die Luftausströmöffnungen 22 in der Druckverteilungsschicht 17 beim Sitzteil 11 direkt oder bei der Rückenlehne 12 direkt und durch den Luftkanal 28 und die Luftaustrittsöffnung 29 im Polsterbezug 18 aus der Polsterauflage 16 aus. Dadurch wird ein recht großer Luftfeuchtigkeits-und Temperaturgradient gegenüber dem Mikroklima auf der Polsteroberfläche des Polsters 13 erzeugt und in ausreichendem Maße die vom Sitzenden erzeugte Transpirationsfeuchtigkeit von der Polsteroberfläche abgeführt.

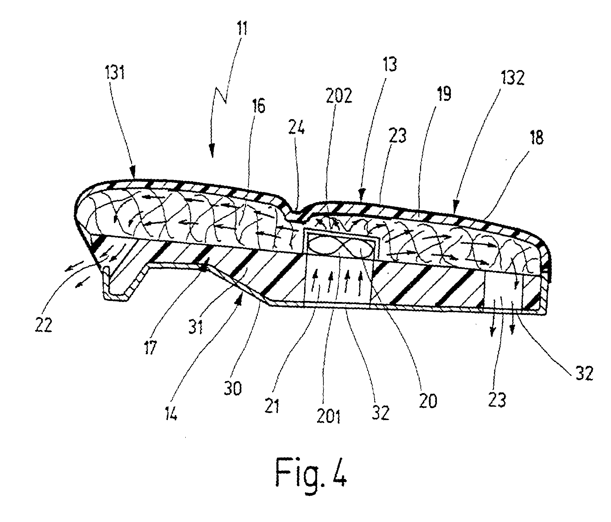

In dem in Fig. 4 im Längsschnitt dargestellten, modifizierten Sitzteil 11 eines Fahrzeugsitzes ist der Polsterträger 14 als Sitzschale 30 und die luftundurchlässige Druckverteilungsschicht 17 als Schaumkörper 31 ausgebildet, der sich auf der Sitzschale 30 abstützt. Die Lufteinströmöffnung 21 und die Luftausströmöffnungen 22 in der Druckverteilungsschicht 17 sind von den Schaumkörper 31 durchdringenden Kanälen 32 gebildet, die mit Öffnungen 33 in der Sitzschale 30 korrespondieren. Im übrigen ist das Sitzteil 11 gemäß Fig. 4 in gleicher Weise aufgebaut wie das Sitzteil 11 in Fig. 1, so daß gleiche Bauteile mit gleichen Bezugszeichen versehen sind.

## Patentansprüche

1. Fahrzeugsitz mit einem in einem Sitzteil (11) und/oder in einer Rückenlehne (12) integrierten Polster (13), das eine luftdurchflutbare Ventilationsschicht (16) und einen die dem Sitzenden zugekehrte Polsteroberfläche überspannenden, luftdurchlässigen Polsterbezug (18) aufweist, und mit mindestens einem elektrisch angetriebenen Ventilator (20) zum Einblasen von Luft in die Ventilationsschicht (16),
**dadurch gekennzeichnet,**
**daß** der Ventilator (20) so ausgebildet ist, daß er axial ansaugt und zumindest radial ausbläst, und daß der Ventilator (20) in der Ventilationsschicht (16) mit auf der vom Polsterbezug (18) abgekehrten Seite des Polsters (13) freiliegender Ansaugöffnung (201) angeordnet ist.

2. Sitz nach Anspruch 1,
**dadurch gekennzeichnet,**
**daß** der Ventilator (20) als Radiallüfter mit axialer Ansaugöffnung (201) ausgebildet ist.

3. Sitz nach Anspruch 1,
**dadurch gekennzeichnet,**
**daß** der Ventilator (20) so ausgebildet ist, daß er zusätzlich axial ausbläst, und daß im Bereich der axialen Ausblasöffnung (202) des Ventilators (20) die von der Ausblasöffnung (202) abgekehrte Oberseite der Ventilationsschicht (16) mit einer luftundurchlässigen Sperrschicht (23), z.B. einer Folie, abgedeckt ist.

4. Sitz nach Anspruch 3,
**dadurch gekennzeichnet,**
**daß** die Sperrschicht (23) sich über den unmittelbaren Bereich der axialen Ausblasöffnung (202) des Ventilators (20) hinaus erstreckt und in dem Erstreckungsbereich mindestens teilweise perforiert ist.

5. Sitz nach einem der Ansprüche 1 - 4,
**dadurch gekennzeichnet,**
**daß** die Ventilationsschicht eine luftdurchlässige Polsterauflage (16) ist, die nur unter Zwischenlage einer luftundurchlässigen Druckverteilungsschicht (17) auf einem Polsterträger (18) aufliegt, und daß die Druckverteilungsschicht (17) eine mit der Ansaugöffnung (201) des Ventilators (20) kongruente Lufteinströmöffnung (21) aufweist.

6. Sitz nach Anspruch 5,
**dadurch gekennzeichnet,**
**daß** die Lufteintrittsöffnung (21) in der Druckverteilungsschicht (17) und die Ansaugöffnung (201) des Ventilators (20) unmittelbar aneinanderliegen.

7. Sitz nach einem der Ansprüche 1 - 6,
**dadurch gekennzeichnet,**
**daß** in der Druckverteilungsschicht (17) Luftaustrittsöffnungen (22) ausgebildet sind, die einen größtmöglichen Abstand von dem Ventilator (20) haben.

8. Sitz nach einem der Ansprüche 1 - 7,
**dadurch gekennzeichnet,**
**daß** der mindestens eine Ventilator (20) etwa mittig in der Polsterfläche plaziert ist.

9. Sitz nach einem der Ansprüche 1 - 7,
**dadurch gekennzeichnet,**
**daß** zwei Ventilatoren (20) etwa mittig in der Polsterfläche und im Querabstand in Sitzbreite gesehen nebeneinander angeordnet sind.

10. Sitz nach einem der Ansprüche 7 - 9,
**dadurch gekennzeichnet,**
**daß** die Luftausströmöffnungen (22) in Sitztiefe des Sitzteils (11) gesehen nahe dem vorderen und hinteren Ende des Polsters (13) und in Höhe der Rückenlehne (12) gesehen nahe dem oberen und unteren Ende des Polsters (13) angeordnet sind.

11. Sitz nach Anspruch 10,
**dadurch gekennzeichnet,**
**daß** die Rückenlehne (12) auf ihrer vom Polsterbezug (18) abgekehrten Rückseite mit einer Lehnenverkleidung (25) abgedeckt und zwischen Polster (13) und Lehnenverkleidung (25) ein mit einer Lufteintrittsöffnung (27) versehener Hohlraum (26) ausgebildet ist und daß die obere Luftausströmöffnung (22) in der Druckverteilungsschicht (17) über einen Luftkanal (28) an einer in der Lehnenverkleidung (25) oder in dem über die Lehnenoberkante bis auf die Lehnenrückseite gezogenen Bereich des Polsterbezugs (18) ausgebildeten Luftaustrittsöffnung (29) angeschlossen und die untere Luftaustrittsöffnung (22) außerhalb des Hohlraums (26) an der Unterseite der Rückenlehne angeordnet ist.

12. Sitz nach Anspruch 11,
**dadurch gekennzeichnet,**
**daß** die Lufteintrittsöffnung (27) im unteren Bereich der Rückenlehnenrückseite in der Lehnenverkeidung (25) ausgebildet ist.

13. Sitz nach einem der Ansprüche 5 - 12,
**dadurch gekennzeichnet,**
**daß** zwischen der luftdurchlässigen Polsterauflage (16) und dem luftdurchlässigen Polsterbezug (18) eine luftdurchlässige Bezugsfüllung (19) angeordnet ist.

14. Sitz nach einem der Ansprüche 5 - 13,
**dadurch gekennzeichnet,**
**daß** der Polsterträger (14) ein in einem Rahmen (15) aufgespannter Federkern ist und die luftundurchlässige Druckverteilungsschicht (17) aus Vlies oder Gummihaarmaterial großer Dicht besteht.

15. Sitz nach einem der Ansprüche 5 - 13,
**dadurch gekennzeichnet,**
**daß** der Polsterträger (14) eine Sitzschale (30) ist und die luftundurchlässige Druckverteilungsschicht (17) als ein auf der Sitzschale (30) sich abstützendes Schaumpolster (31) ausgebildet ist und daß die Luftein- und Luftausströmöffnungen (21,22) von das Schaumpolster (31) durchdringenden Kanälen gebildet sind, die in korrespondierenden Öffnungen (32) in der Sitzschale (30) münden.

16. Sitz nach einem der Ansprüche 1 - 15,
**dadurch gekennzeichnet,**
**daß** zwischen der luftdurchlässigen Polsterauflage (16) und dem luftdurchlässigen Polsterbezug (18) eine Bezugsfüllung (19) aus Polsterwatte, Wollvlies, einer offenporigen oder zumindest teilweise perforiertem Schaumstoffschicht oder einer Watte-Schaumstoffkombination besteht und vorzugsweise daß in der Bezugsfüllung Heizleiter einer elektrischen Sitzheizung eingebettet sind.

## Claims

1. Vehicle seat with a cushion (13) integrated into a seat portion (11) and/or in a backrest (12), which comprises a ventilation layer (16) through which air can circulate and an air-permeable cushion cover (18) stretched over the cushion surface facing the seat's occupant, and having at least one electrically driven fan (20) for blowing air into the ventilation layer (16),
**characterised in that**
the fan (20) is so constructed that it draws air in axially and blows it out at least radially, and the fan (20) in the ventilation layer (16) is arranged with a free intake opening (201) on the side of the cushion (13) facing away from the cushion cover (18).

2. Seat according to Claim 1,
**characterised in that**
the fan (20) is designed as a radial blower with an axial intake opening (201).

3. Seat according to Claim 1,
**characterised in that**
the fan (20) is so constructed that it also blows air out axially, and in the area of the axial blowing opening (202) of the fan (20) the upper side of the ventilation layer (16) facing away from the blowing opening (202) is covered by an air-impermeable blocking layer (23), for example a foil.

4. Seat according to Claim 3,
**characterised in that**
the blocking layer (23) extends over the immediate area of the axial blowing opening (202) of the fan (20) and is at least partly perforated in its extension area.

5. Seat according to any of Claims 1 to 4,
**characterised in that**
the ventilation layer is an air-permeable cushion overlay (16) which rests on a cushion support (18) only with interposition of an air-impermeable pressure distribution layer (17), and the pressure distribution layer (17) has an air inlet opening (21) that is congruent with the intake opening (201) of the fan (20).

6. Seat according to Claim 5,
**characterised in that**
the air inlet opening (21) in the pressure distribution layer (17) and the intake opening (201) of the fan (20) are positioned directly adjacent to one another.

7. Seat according to any of Claims 1 to 6,
**characterised in that**
in the pressure distribution layer (17) air outlet openings (22) are formed, which are as far from the fan (20) as possible.

8. Seat according to any of Claims 1 to 7,
**characterised in that**
the at least one fan (20) is positioned approximately in the middle of the cushion surface.

9. Seat according to any of Claims 1 to 7,
**characterised in that**
two fans (20) are arranged approximately in the middle of the cushion surface and a transverse distance apart as viewed along the width of the seat.

10. Seat according to any of Claims 7 to 9,
**characterised in that**
viewed along the depth of the seat portion (11), the air outlet openings (22) are positioned near the front and rear ends of the cushion (13), and viewed along the height of the backrest (12), they are positioned near the upper and lower ends of the cushion (13).

11. Seat according to Claim 10,
**characterised in that**
on its rear side facing away from the cushion cover (18) the backrest (12) is covered by a seat cover (25) and between the cushion (13) and the seat cover (25) a hollow space (26) provided with an air inlet opening (27) is formed, and the upper air outlet opening (22) in the pressure distribution layer (17) is connected via an air duct (28) to an air outlet opening (29) formed in the seat cover (25) or in the area of the cushion cover (18) which is pulled over the top edge of the backrest as far as the back of the backrest, and the lower air outlet opening (22) is positioned outside the hollow space (26) on the underside of the backrest.

12. Seat according to Claim 11,
**characterised in that**
the air inlet opening (27) is formed in the lower area of the rear of the backrest, in the seat cover (25),

13. Seat according to any of Claims 5 to 12,
**characterised in that**
an air-permeable cover filling (19) is positioned between the air-permeable cushion overlay (16) and the air-permeable cushion cover (18).

14. Seat according to any of Claims 5 to 13,
**characterised in that**
the cushion support (14) is a sprung core held in a frame (15) and the air-impermeable pressure distribution layer (17) is made from high-density fleece or rubber fibre material.

15. Seat according to any of Claims 5 to 13,
**characterised in that**
the cushion support (14) is a seat shell (30) and the air-impermeable pressure distribution layer (17) is formed as a foam pad (31) resting on the seat shell (30), and the air intake and outlet openings (21, 22) are formed as ducts passing through the foam pad (31), which open into corresponding apertures (22) in the seat shell (30).

16. Seat according to any of Claims 1 to 15,
**characterised in that**
between the air-permeable cushion overlay (16) and the air-permeable cushion cover (18), a cover filling (19) consists of cushion wadding, wool fleece, an open-pored or at least partially perforated foam layer or a wadding/foam combination, and preferably, heating elements of an electric seat heater are embedded in the cover filling.

## Revendications

1. Siège de véhicule comprenant un rembourrage (13) intégré dans une partie (11) d'assise et/ou dans un dossier (12), lequel rembourrage comprend une couche de ventilation (16) pouvant laisser passer l'air et un revêtement de rembourrage (18) perméable à l'air, recouvrant la surface du rembourrage tournée vers la personne assise, et au moins un ventilateur (20) à commande électrique pour l'injection d'air dans la couche de ventilation (16),
**caractérisé en ce que** le ventilateur (20) est aménagé de manière telle qu'il aspire l'air de façon axiale et qu'il souffle l'air de façon au moins radiale, et **en ce que** le ventilateur (20) est disposé dans la couche de ventilation (16) en ayant une ouverture d'aspiration dégagée (201) sur le côté du rembourrage (13) éloigné du revêtement de rembourrage (18).

2. Siège selon la revendication 1, **caractérisé en ce que** le ventilateur (20) est agencé comme un ventilateur radial à ouverture d'aspiration axiale (201).

3. Siège selon la revendication 1, **caractérisé en ce que** le ventilateur (20) est agencé de façon telle, que, en outre, il souffle l'air de façon axiale et **en ce que**, dans la zone de l'ouverture de sortie d'air axiale (202) du ventilateur (20), le côté supérieur de la couche de ventilation (16), éloigné de l'ouverture de sortie d'air (202), est recouvert d'une couche isolante (23), par exemple une feuille, imperméable à l'air.

4. Siège selon la revendication 3, **caractérisé en ce que** la couche isolante (23) s'étend au-dessus de la zone immédiate de l'ouverture de sortie d'air axiale (202) du ventilateur (20) et **en ce que** cette couche isolante, dans la zone de cette extension, est au moins partiellement perforée.

5. Siège selon l'une quelconque des revendications 1 à 4, **caractérisé en ce que** la couche de ventilation est une couche de rembourrage (16) perméable à l'air qui, seulement avec interposition d'une couche (17) de répartition de la pression, imperméable à l'air, est en appui sur un support de rembourrage (18), et **en ce que** la couche (17) de répartition de la pression comprend une ouverture d'entrée d'air (21) coïncidant avec l'ouverture d'aspiration d'air (201) du ventilateur (20).

6. Siège selon la revendication 5, **caractérisé en ce que** l'ouverture d'entrée d'air (21) dans la couche (17) de répartition de la pression et l'ouverture d'aspiration d'air (201) du ventilateur (20) sont placées directement l'une contre l'autre.

7. Siège selon l'une quelconque des revendications 1 à 6, **caractérisé en ce que** des ouvertures de sortie d'air (22) sont. aménagées dans la couche (17) de répartition de la pression, lesquelles ouvertures de sortie d'air sont disposées suivant un intervalle le plus grand possible par rapport au ventilateur (20).

8. Siège selon l'une quelconque des revendications 1 à 7, **caractérisé en ce que** le ventilateur (20) au nombre d'au moins un est placé à peu près au milieu de la surface du rembourrage.

9. Siège selon l'une quelconque des revendications 1 à 7, **caractérisé en ce que** deux ventilateurs (20) sont disposés à peu près au milieu de la surface de rembourrage et, vus dans le sens de la largeur du siège, l'un à côté de l'autre, séparés par l'intervalle transversal.

10. Siège selon l'une quelconque des revendications 7 à 9, **caractérisé en ce que** les ouvertures de sortie d'air (22), vues dans le sens de la profondeur de la partie (11) d'assise, sont disposées à proximité des extrémités avant et arrière du rembourrage (13) et, vues dans le sens de la hauteur du dossier (12), sont disposées à proximité des extrémités supérieure et inférieure du rembourrage (13).

11. Siège selon la revendication 10, **caractérisé en ce que** le dossier (12), sur sa face arrière éloignée du revêtement de rembourrage (18), est recouvert d'une garniture de dossier (25), **en ce qu'**un espace creux (26), doté d'une ouverture d'entrée d'air (27), est aménagé entre le rembourrage (13) et la garniture de dossier (25), **en ce que** l'ouverture de sortie d'air supérieure (22), dans la couche (17) de répartition de la pression, est reliée, via un conduit de ventilation (28), à une ouverture de sortie d'air (29) aménagée dans la garniture de dossier (25) ou dans la zone du revêtement de rembourrage (18) s'étendant au-dessus du bord supérieur du dossier jusqu'à la face arrière du dossier, et **en ce que** l'ouverture de sortie d'air inférieure (22), à l'extérieur de l'espace creux (26), est disposée sur la partie inférieure du dossier.

12. Siège selon la revendication 11, **caractérisé en ce que** l'ouverture d'entrée d'air (27) est aménagée dans la zone inférieure de la face arrière du dossier dans la garniture de dossier (25).

13. Siège selon l'une quelconque des revendications 5 à 12, **caractérisé en ce qu'**un rembourrage de revêtement (19) perméable à l'air est disposé entre la couche de revêtement (16) perméable à l'air et le revêtement de rembourrage (18) perméable à l'air.

14. Siège selon l'une quelconque des revendications 5 à 13, **caractérisé en ce que** le support de rembourrage (14) est un ressort fixé dans un cadre (15) et **en ce que** la couche (17) de répartition de la pression, imperméable à l'air, se compose d'un textile non tissé ou d'un matériau en poils en caoutchouc de grande densité.

15. Siège selon l'une quelconque des revendications 5 à 13, **caractérisé en ce que** le support de rembourrage (14) est une cuvette d'assise (30) et **en ce que** la couche (17) de répartition de la pression, imperméable à l'air, est aménagée comme un rembourrage en mousse (31) venant en appui sur la cuvette d'assise (30), et **en ce que** les ouvertures d'entrée d'air et de sortie d'air (21, 22) sont formées par des canaux traversant le rembourrage en mousse (31), lesquels canaux découchent dans la cuvette d'assise (30), dans des ouvertures correspondantes (32).

16. Siège selon l'une quelconque des revendications 1 à 15, **caractérisé en ce qu'**un rembourrage de revêtement (19), prévu entre la couche de rembourrage (16) perméable à l'air et le revêtement de rembourrage (18) perméable à l'air, se compose d'une ouate de rembourrage, d'un non tissé de laine, d'une couche d'un matériau en mousse à pores ouverts ou d'une couche d'un matériau en mousse au moins partiellement perforée ou d'une combinaison d'un matériau en mousse et en ouate et, de préférence, **en ce que** des résistances chauffantes d'un chauffage électrique du siège sont noyées dans le rembourrage du revêtement.
